# EUROPEAN PATENT SPECIFICATION

(11) **EP 2 621 207 B1**
(45) Date of publication and mention of the grant of the patent: **15.04.2015**
(21) Application number: 12152326.0
(22) Date of filing: 24.01.2012
(51) Int. Cl.: H04W 52/34

(54) **Method for distributing the power of a multi-frequency signal among a plurality of subcarriers**
Verfahren zur Verteilung der Leistung eines Mehrfrequenzsignals aus mehreren Unterträgern
Procédé de distribution d'énergie d'un signal multi-fréquence parmi plusieurs sous-porteuses

(43) Date of publication of application: 31.07.2013
(73) Proprietor: ALCATEL LUCENT, 92100 Boulogne-Billancourt (FR)
(72) Inventor: Grand, Jean-Yves, 44708 ORVAULT (FR)
(74) Representative: Sciaux, Edmond

(56) References cited:
- EP-A1- 1 530 387
- EP-A1- 1 594 260
- WO-A2-00/67394
- WO-A2-01/76098
- US-A1- 2010 110 996

## Description

### TECHNICAL FIELD

The present invention relates to a method, a computer program, a non transitory program storage medium and a radio access point for distributing the power of a multi-frequency signal among a plurality of subcarriers of said multi-frequency signal for a plurality of cells.

### BACKGROUND OF THE INVENTION

It is known a method for inter-cell interference coordination with power planning in a radio communication system employing multi-carrier techniques disclosed by the document EP1594260. It also known a method for balancing the distribution of interference between radio cells in a wireless communication system disclosed by the document EP1530387.

Besides, methods for distributing the power of a multi-frequency signal among a plurality of subcarriers are well-known by the man skilled in the art. A cell corresponds to a disk where the center is a radio access point comprising an omni directional antenna or a directional antenna, the radius of said disk depending on the frequency power emitted by said radio access point. The cell forms a geographical area covered by said radio access point. If each radio access point of each cell allocates the same frequency power on the whole area of their cell; interferences will occur at the boundary between two cells and communications will worsen at said boundary.

To overcome the aforementioned drawback, solutions exist in order to mitigate interferences at the border of two cells: the power affected to a part of the subcarriers is reduced for one cell; such reduction is also carried out for the second cell but for another part of the subcarriers as shown e.g. in EP 1594260. Therefore, if each cell uses subcarriers with higher frequency that the neighbour one, communications for a user terminal within the first cell and located at the boundary between the first and second cells will enhance. However, if the frequency power emitted by a first radio access point belonging to the first cell is superior to the power of the same frequency emitted by a second radio access point belonging to the second cell, communications of a user terminal within the second cell and located at the boundary between the first and the second cells will worsen.

### SUMMARY OF THE INVENTION:

The object of the invention is therefore to overcome the drawbacks of the aforementioned method. More particularly, the invention allows avoiding interferences between at least two cells and wherever a user terminal is located within one of the two cells.

To this end, the invention relates to a method for distributing the power of a multi-frequency signal among a plurality of subcarriers of said multi-frequency signal as defined in claim 1.

In addition to the main features aforementioned in the previous paragraph, the method for distributing the power of a multi-frequency signal among a plurality of subcarriers according to the invention may also have one or more of the additional features below, taken individually or in any technically feasible combination.

In a none limitative embodiment, the method according to the invention comprises a preliminary step of attributing a frequency profile to the serving cell so that the frequency profile of adjacent cells is different.

In a none limitative embodiment, N equals 3 or N equals 7.

In a none limitative embodiment:
- a user terminal informs, periodically a radio access point belonging to the cell where the user terminal is located, of the neighbouring cell wherein the frequency power reception is higher, and
- the emissions of frequency signal are scheduled periodically according to an allocation graph and to said information's.

In a none limitative embodiment the allocation graph is constructed as following:
- for each cell a frequency profile is attributed and the corresponding radio access point emits the frequency signal at a first power level in all subcarrier groups of a master subcarrier group,
- for each two other master subcarrier groups adjacent to said master subcarrier group, the radio access point:
   ∘ emits the frequency signal at said first power level in one subcarrier group adjacent to said master subcarrier group,
   ∘ emits the frequency signal at a second power level in the other subcarrier groups.

In a none limitative embodiment, the allocation graph is constructed as following:
- for each cell a frequency profile is attributed and the corresponding radio access point emits the frequency signal at a first power level in all subcarrier groups of a master subcarrier group,
- for all the other master subcarrier groups, the radio access point:
   ∘ emits the frequency signal at said first power level in a same subcarrier group of each master subcarrier group, the same subcarrier group being different for each frequency profile, and
   ∘ emits the frequency signal at a second power level in the other subcarrier groups.

The invention further concerns a computer program comprising a set of instructions, which when loaded into, and executed by, a radio access point, causes the radio access point to carry out the method for distributing the power of a multi-frequency signal among a plurality of subcarriers according to the invention.

The invention concerns also a non transitory program storage medium comprising a computer program comprising a set of instructions, which when loaded into, and executed by, a radio access point, causes the radio access point to carry out the method for distributing the power of a multi-frequency signal among a plurality of subcarriers according to the invention.

Besides, the invention relates to a radio access point for distributing the power of a multi-frequency signal among a plurality of subcarriers of said multi-frequency signal as defined in independent claim 9.

### BRIEF DESCRIPTION OF THE DRAWINGS:

Further features and advantages of the invention will become clear upon reading the following description given by way of non-limiting indication and with reference to the accompanying drawings, in which:
- Figure 1 illustrates, in a none-limitative embodiment, the method according to the invention;
- Figures 2 to 4 illustrate a none-limitative embodiment of scheduling a multi-frequency signal among a plurality of subcarriers according to the method of figure 1 applied to three cells;
- Figures 5 and 6 illustrate a further none-limitative embodiment of scheduling a multi-frequency signal among a plurality of subcarriers according the method of figure 1 applied to a seven cells scheme;
- Figure 7 illustrates a radio access point for distributing the power of a multi-frequency signal among a plurality of subcarriers according to the invention.

For reasons of clarity, only those elements beneficial for comprehension of the invention have been shown, more specifically schematically and with no regard for scale. Furthermore, like elements illustrated in different figures are denoted by like reference numerals.

### DESCRIPTION OF EMBODIMENTS OF THE INVENTION:

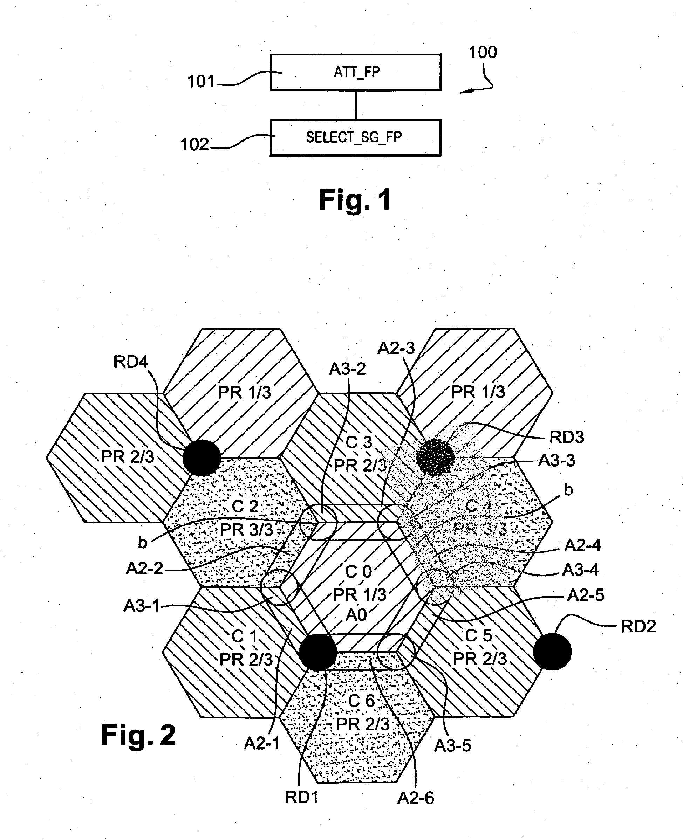

The figure 1 illustrates a method 100 for distributing the power of a multi-frequency signal among a plurality of subcarriers of said multi-frequency signal for a plurality of cells, wherein said multi-frequency signal is divided in a plurality of subcarrier groups, N subcarrier groups forming a master subcarrier group, a cell comprising N master subcarrier groups. The method 100 according to the invention comprises the step of, when a user terminal served by a serving cell is positioned at the border of at least two cells:
- attributing 101 (also called ATT_FP) a frequency profile to the serving cell so that the frequency profile of adjacent cells is different,
- selecting 102 (also called SELECT_SG_FP) at least one subcarrier group of a frequency profile attributed to said serving cell so that the power of said at least one subcarrier group selected is superior to the power of corresponding subcarrier group from a frequency profile attributed to an adjacent cell, each frequency profile comprising a plurality of master subcarrier groups and comprising:
   ∘ one master subcarrier group where a frequency signal is emitted at a first power level in all its subcarrier group; said one master subcarrier group being different for each frequency profile ;
   ∘ one subcarrier group of each other master subcarrier group where the frequency signal is emitted at said first power level ; said one subcarrier group being different for each frequency profile ;
   ∘ in the others subcarrier groups of said other master subcarrier groups, the frequency signal is emitted at a second power level, said second power level being higher than the first power level.

In other terms and in a general manner, some frequency profiles are created in order to be used by a cell (only one profile per cell). The attribution of a profile to the cell is done in such manner that two adjacent cells have not the same profiles. Up to N profiles can be used. The profiles are defined in such manner that:
- each profile has one complete master subcarrier group where the transmission power maximum is reduced, this master subcarrier group being different for each profile;
- In the other master subcarrier groups only one of the subcarrier groups is used with a reduced transmission power maximum. For those other master subcarrier groups, the subcarrier group (wherein a reduced transmission power is used) is different for each frequency profile.

Figure 2 illustrates in a none-limitative embodiment a plurality of cells C1, C2, C3, C4, C5, C6, C7, C8, C9, each cell being represented by a hexagon inscribed in a disk (not illustrated). A radio access point RD1, RD2, RD3, RD4 is located at each intersection of three cells C0, C1, C2, C3, C4, C5, C6, C7, C8, C9. For example, the radio access point RD1 is located at the intersection of the three cells C0, C1 and C2.
Each radio access point comprises in the example three antennas (not illustrated), each antenna covering a cell.
Furthermore, each cell is divided in areas A0, A2, A3:
- areas at the border of three cells are named A3,
- areas at the border of two cells are named A2,
- the area located in the center of the cell and not at the boundary of several cells is named A0.

in the none limitative embodiment illustrated in the figure 2, all cells with the same orientation have the same frequency profile (an orientation depends of the antenna orientation and is represented by a sense of hatching); two adjacent cells have not the same frequency profile (frequency profile PR1/3 to PR3/3 in the example).

In the example, each cell is divided in 13 areas: one central area A0, six areas at the border of two cells (A2-1 to A2-6) and six areas at the border of three cells (A3-1 to A3-6).

In a none limitative embodiment, rules for subcarriers (or equivalent) allocation scheduling are defined as following:
- Assuming that the subcarriers or subcarrier groups, where the transmission used by the neighbour cells is reduced, are known by the serving cell,
- Attributing to the areas A3 or A2 subcarriers or subcarrier groups where the serving cell used high transmission power (authorized by the frequency profile) and the other cells involved reduced transmission power.

- For the areas A3, if the bandwidth needed is higher than this attributed then, a scheduler maximizes the number of subcarriers given by the above rule, but is authorize to use the other subcarriers or group of subcarriers where only one neighbour cell concerned transmits at a reduced transmission power level.
- For the areas A3 or A2, if the bandwidth needed is higher than this attributed then the scheduler maximize the number of subcarriers given by the two above rules, but is authorize to use the others subcarriers.
- For the area A0, the serving cell uses any subcarrier, but respects the maximum power level indicated by the frequency profile.

It is to be noted that the global power emitted on each cell is identical.

The profiles of cells are supposed to be known by configuration or courier inter cells. Furthermore, each user terminal informs periodically a radio access point belonging to the cell where the user terminal is located of the neighbouring cell wherein the frequency power reception is higher, and the emissions of frequency signal are scheduled periodically according to an allocation graph and to said information. This particularity allows avoiding interference.

### - When N equals 3:

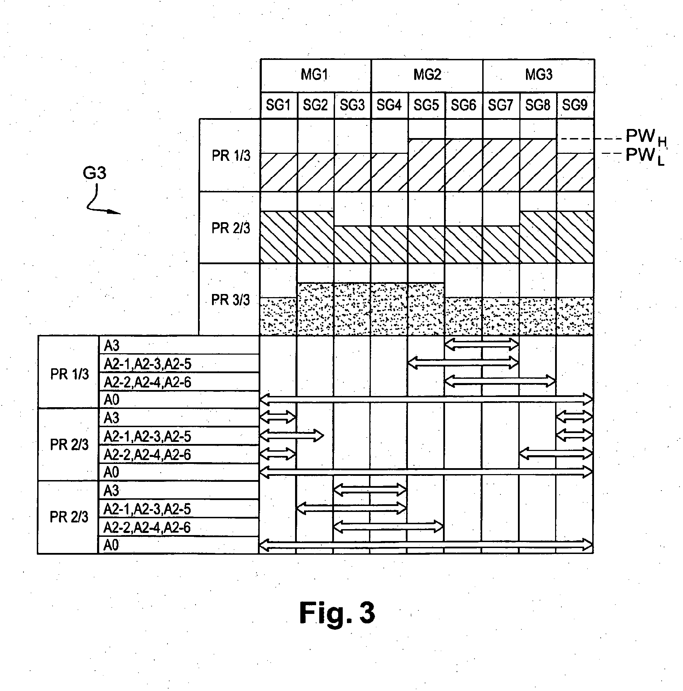

The figure 3 illustrates an allocation graph G3 comprising a first frequency profile PR1/3, a second frequency profile PR2/3 and a third frequency profile PR3/3. Each cell C1, C2, C3 comprises three master subcarrier groups MSG1; MSG2 and MSG3. Furthermore, each master subcarrier group MSG1, MSG2, MSG3 comprises three subcarrier groups. More particularly, MSG1 comprises SG1, SG2, and SG3. MSG2 comprises SG4, SG5 and SG6. MSG3 comprises SG7, SG8 and SG9. Each frequency profile is attributed by a radio access point to a different cell.
In other words, nine subcarrier groups of a multi-frequency signal are allocated to each cell C1, C2, C3 and three subcarrier groups are grouped to form a master subcarrier group MSG1, MSG2, MSG3.

in a non limitative example, the allocation graph G3 is constructed as following:
- for each cell Cn a frequency profile is attributed and the corresponding radio access point RDn emits the frequency signal at a first power level PW_{L} in all subcarrier groups of a master subcarrier group MSGn,
- for each two other master subcarrier groups MSGn-1 and MSGn+1 adjacent to said master subcarrier group MSGn, the radio access point RDn:
   ∘ emits the frequency signal at said first power level PW_{L} in one subcarrier group adjacent to said master subcarrier group MSGn,
   ∘ emits the frequency signal at a second power level PW_{H} in the other subcarrier groups.

For the frequency profile PR1 /3:
- the master subcarrier group MSG1 has a reduced transmission power maximum on all the subcarrier group SG1, SG2, SG3,
- the master subcarrier group MSG2 has a reduced subcarrier group SG4 different from the reduced subcarrier group SG6 of the frequency profile PR 3/3,
- the master subcarrier group MSG3 has a reduced subcarrier group SG9 different from the reduced subcarrier group SG7 of the frequency profile PR 2/3.

For the frequency profile PR 2/3:
- the master subcarrier group MSG2 has a reduced transmission power maximum on all the subcarrier group SG4, SG5, SG6,
- the master subcarrier group MSG1 has a reduced subcarrier group SG3 different from the reduced subcarrier group SG1 of the frequency profile PR 3/3,
- the master subcarrier group MSG3 has a reduced subcarrier group SG7 different from the reduced subcarrier group SG9 of the frequency profile PR 1/3.

For the frequency profile PR 3/3:
- the master subcarrier group MSG3 has a reduced transmission power maximum on all the subcarrier group SG7, SGB, SG9,
- the master subcarrier group MSG1 has a reduced subcarrier group SG1 different from the reduced subcarrier group SG3 of the frequency profile PR 2/3,
- the master subcarrier group MSG2 has a reduced subcarrier group SG6 different from the reduced subcarrier group SG4 of the frequency profile PR 1 /3.

According to the allocation graph G3 pre-recorded in each radio access point RD1, RD2, RD3 illustrated in figure 3, at the border b of three cells C0, C1, C2, if a first user terminal is within the first cell C1 (I.e. the serving cell of the first user terminal) and if the frequency profile PR1/3 is allocated to the first cell C1 then the subcarrier group SG6 and/or the subcarrier group SG7 is (are) allocated to said first user terminal.

In another example, at said border b of three cells, if a second user terminal is within the second cell C2 (i.e. second cell is the serving cell of the second user terminal) and if the frequency profile PR2/3 is allocated to the second cell then the subcarrier group SG1 and/or the subcarrier group SG9 is (are) allocated to said second user terminal.

The same method 100 is relevant to another user terminal within the third cell C3 and located at the border b of said three cells C1, C2, and C3.

According to this embodiment, the risk of interference is decreased. Furthermore, this embodiment allows avoiding communication interferences at the border b of two cells but also at the border b of three cells.

According to the user terminal location one or several subcarrier groups are allocated to said user terminal for its communications with its radio access point according to the allocation graph G3.

According to figures 2 and 3, for example, for a user terminal located in an area A3 of the serving cell C0 to which the frequency profile PR 1/3 is allocated, the subcarrier groups SG6 and SG7 can be selected by the scheduler using the maximum power, in the adjacent cells that use the frequency profile PR 2/3 or 3/3, the power is reduced.

Moreover, for a user terminal located in one of areas A2-1, A2-3 or A2-5 of the serving cell C0 to which the frequency profile PR 1/3 is allocated, the subcarrier groups SG5, SG6 and SG7 can be selected by the scheduler using the maximum power, in the adjacent cells that use the frequency profile PR 2/3 the power is reduced.

For a user terminal located in one of the areas A2-2, A2-4 or A2-6 of the serving cell C0 to which the frequency profile PR1/3 is allocated, the subcarrier groups SG6, SG7 and SG8 can be selected by the scheduler using the maximum power. In the adjacent cells that use the frequency profile PR 2/3, the power is reduced.

For a user terminal located in area A0 of the serving cell C0 to which the frequency profile PR 1/3 is allocated, any subcarrier group can be selected by the scheduler taking in account the maximum power of the profile.
Besides, remaining non allocated subcarriers or subcarrier group can be used for a user terminal in area A3 or A2 if needed in order to increase the throughput transmitted.

According to the allocation graph G3 illustrated in figure 3, the same principle can be applied to another cell wherein another profile is allocated, says profile PR 2/3 or 3/3.

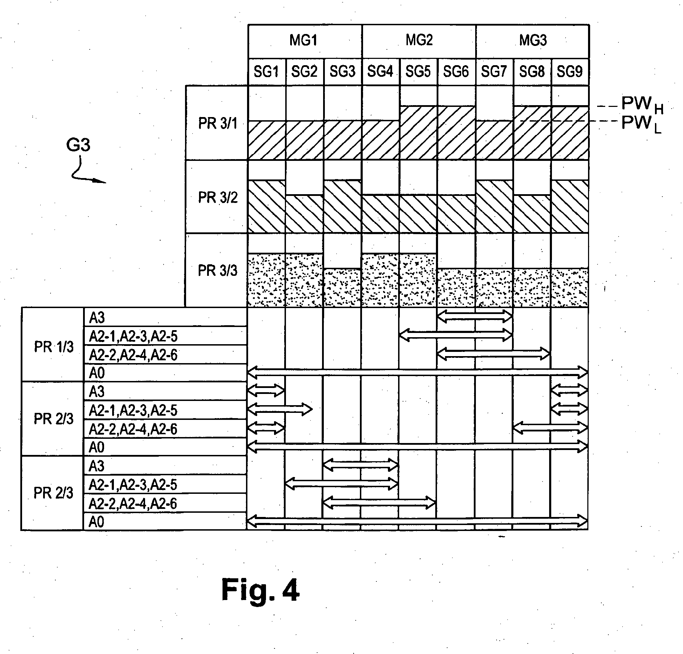

In another example, the allocation graph G3 is for example constructed as following (Cf. figure 4):
- For each cell a frequency profile PR1/3, PR2/3, PR3/3 is attributed and the corresponding radio access point emits the frequency signal at a first power level PW_{L} in all subcarrier groups SG1, SG2, SG3 of a master subcarrier group MSG1, MSG2, MSG3,
- for all the other master subcarrier groups MSG1, MSG2, MSG3, the radio access point :
   ∘ emits the frequency signal at said first power level PW_{L} in a same subcarrier group SG1, SG2, SG3 of each master subcarrier group MSG1, MSG2, MSG3, the same subcarrier group SG1, SG2, SG3 being different for each frequency profile PR1/3, PR2/3, PR3/3, and
   ∘ emits the frequency signal at a second power level PW_{H} in the other subcarrier groups SG1, SG2, SG3.

As will be described in details below, in order to solve drawback of communications interference between three cells, the idea is to reserve part of multi-frequency signal 1/N named subcarrier where the radio access point is allowed to send with a higher level. This part can be also 1/N² where N² is the number of subcarriers groups. In this part, 1/N² the level must also be reduced with the same level as the existing reduced subcarrier, this 1/N² shift when the number of the profile increase (Cf. figure 3). With this additional part where the level of transmission is also reduced, this gives an opportunity to find resources with two other cells which are sending at a lower level, i.e. with lower interferences.

### • When N equals 7

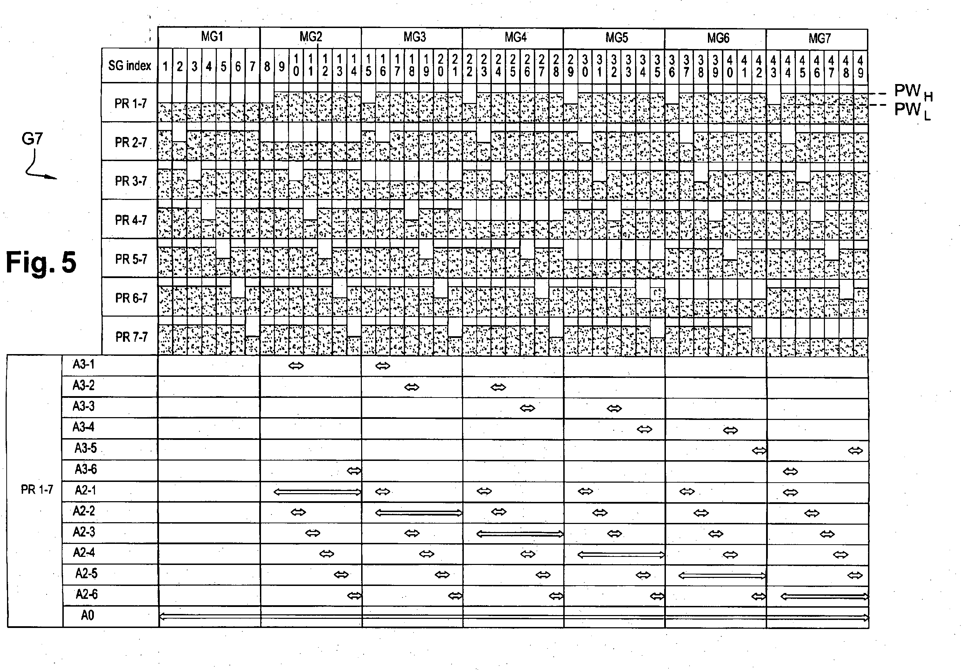

In a none-limitative embodiment illustrated in figure 5, when N equals 7 each frequency profile of the graph G7 is divided in seven master subcarrier groups MSG1, MSG2, MSG3, MSG4, MSG5, MSG6, MSG7 and each master subcarrier group is divided in seven subcarrier groups SG1 to SG49.

In the case of seven cells, the allocation graph G7 is for example construed as following:
- for each cell Cn, the corresponding radio access point RDn emits for each frequency profile the frequency signal at a first power level PW_{L} in all subcarrier groups of the master subcarrier group MSGn,
- for all the other master subcarrier groups of said frequency profile, the radio access point RDn:
   ∘ emits the frequency signal at said first power level PW_{L} in a same subcarrier group, the same subcarrier group being different for each frequency profile, and
   ∘ emits the frequency signal at a second power level PW_{H} in the other subcarrier groups SG.

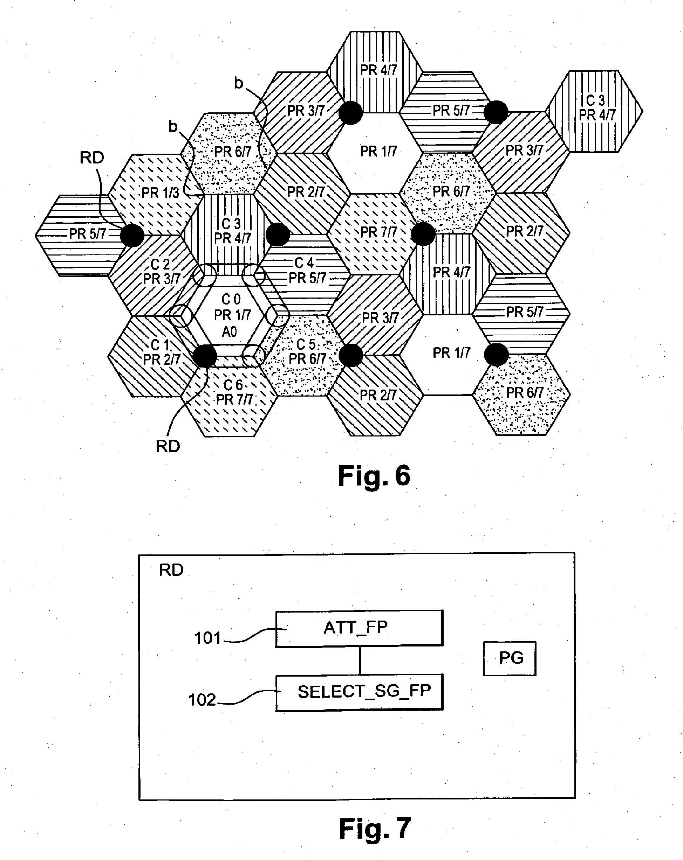

A first cell C0, a second cell C1, a third cell C2, a fourth cell C3, a fifth cell C4, a sixth cell C5 and a seventh cell C6 are illustrated in figure 6. A frequency profile PR1/7, PR2/7, PR3/7, PR4/7, PR5/7, PR6/7, PR7/7 is attributed to each cell C0, C1, C2, C3, C4, C5, C6 and each frequency profile comprises seven master subcarrier groups MSG1, MSG2, MSG3, MSG4, MSG5, MSG6, and MSG7. Furthermore, each master subcarrier group MSG1, MSG2, MSG3, MSG4, MSG5, MSG6, MSG7 comprises seven subcarrier groups. In other words, forty-nine subcarrier groups SG1 to SG49 of a multi-frequency signal are allocated to each cell C0, C1, C2, C3, C4, C5, C6 and seven subcarrier groups are allocated to each master subcarrier group MSG1, MSG2, MSG3, MSG4, MSG5, MSG6, MSG7 of each cell.

In the example of figure 6, a different frequency profile is allocated for each neighbouring cell C1, C2, C3, C4, C5, C6 of a serving cell C0. As illustrated in the figure 2, each cell is comprises 13 areas: one central area A0, six areas at the border of two cells A2-1 to A2-6 and six areas at the border of three cells A3-1 to A3-6.

According to the non limitative allocation graph G7, where N=7, for the frequency profile PR 1/7:
- the master subcarrier group MSG1 has a reduced transmission power maximum (i.e. a frequency signal is emitted at a first power level PW_{L}) on all the subcarrier group SG1, SG2, SG3, SG4, SG5, SG6 and SG7, the master subcarrier group having a reduced transmission power maximum being different for each frequency profile, for example MSG2 for the frequency profile PR2/7,
- the same subcarrier group SG1 of each master subcarrier group MSG2, MSG3, MSG4, MSG5, MSG6, MSG7 of the frequency profile PR1/7 have also a reduced transmission power maximum (i.e. the frequency signal emitted at a first power level PW_{L}). The same subcarrier group having a reduced transmission power maximum is different for each frequency profile, for example SG2 for the frequency profile PR2/7.

So we can see that between any three different frequency profiles there are always opportunities to find subcarrier group where one profile has a high transmission power level where the two others have a reduced one. This particularity permits to avoid communication interferences between three cells.

The bottom of the figure 5 drawing gives the recommended transmission scheduling opportunity for the profile PR 1/7 allocated to a cell C0.

As represented, for a user terminal located in the area A3-1 of the serving cell C0 where the profile PR 1/7 is allocated, the subcarrier groups SG10 and SG16 can be selected by the scheduler using the maximum power (i.e. the second power level PW_{H}). In the adjacent cell C1 where the frequency profile PR 2/7 is allocated and cell C2 where the frequency profile PR 3/7 is allocated, the power is reduced (i.e. the frequency signal is emitted at a first power level PW_{L}).

For each other area A3, also two subcarrier groups can be selected by the scheduler using the maximum power in the serving cell, in the adjacent cells that use the profile PR i/7 or j/7 the power is limited.

For a user terminal located in the area A2-1, of the serving cell C0 where the frequency profile PR 1/7 is allocated, the subcarrier groups SG9 to SG14 plus SG16, SG23, SG30, SG37 and SG44 can be selected by the scheduler using the maximum power in the serving cell C0, in the adjacent cell using the frequency profile PR 2/7 the power is limited.

For a user terminal located in the area A2-i, of the serving cell C0 (frequency profile PR1/7), the SG 7i+2 to 7i+7 plus 7+1+i, 14+1+i, 21+1+l, 28+1+l, 35+1+l, 42+1+l can be selected by the scheduler using the maximum power in the serving cell, in the adjacent cell (that use profile PR1+i/7) the power is limited.

For a user terminal located in the area A0 of the serving cell C0 where the frequency profile PR1/3 is allocated, any subcarrier group can be selected by the scheduler taking into account the maximum power of the frequency profile.

Remaining non allocated subcarrier(s) or subcarrier group(s) can be used for a user terminal in an area A3 or A2 if needed in order to increase the throughput transmitted.
According to the user terminal location the allocation graph G7 is relevant.

According to embodiments illustrated in figures 1, to 6, the risk of interference is decreased. Furthermore, embodiments allow avoiding communication interferences at the border b of two cells but also at the border b of three cells.

The same method 100 is relevant to another user terminal within the second, third, fourth, fifth, sixth or seventh cell and located at the border b (in the area) of two or three cells.

It is to be noted that on seven subcarrier groups of a master subcarrier group of cell the frequency power emitted is reduced and on one subcarrier group of each other master subcarrier group of said cell the frequency power emitted is also reduced. In other terms, on thirteen of forty-nine subcarrier groups of a cell, the frequency power emitted by its radio access point is reduced and on the others subcarrier groups, the frequency power emitted is high. The high quantity of subcarrier groups on which the frequency power is low allows avoiding communication interferences.

It is to be noted that if a user terminal emits lots of informations, then a plurality of subcarrier groups will be allocated to him. Inversely, if a user terminal emits only few information, then only one subcarrier group will be allocated to him.

In a general manner, It can be noted that the value of N can be different for uplink and downlink for example N = 3 in uplink and N = 7 in downlink.

In a not limited embodiment, the method 100 for distributing the power of a multi-frequency signal among a plurality of subcarriers of said multi-frequency signal for a plurality of cells according to the invention is conform to the Long Term Evolution LTE standards. In this case, a radio access point is a base station or an e-Node B. Besides a subcarrier group is a PRB (for physical resource bloc) or a subcarrier group comprises a plurality of PRB. In this case, each subcarrier can comprise a different number of PRB.

A person of skill in the art would readily recognize that steps of various above-described methods can be performed by programmed computers. Herein, some embodiments are also intended to cover program storage devices, e.g., digital data storage media, which are machine or computer readable and encode machine-executable or computer-executable programs of instructions, wherein said instructions perform some or all of the steps of said above-described methods. The program storage devices may be, e.g., digital memories, magnetic storage media such as a magnetic disks and magnetic tapes, hard drives, or optically readable digital data storage media. The embodiments are also intended to cover computers programmed to perform said steps of the above-described methods.

Furthermore, the invention concerns a radio access point for distributing the power of a multi-frequency signal among a plurality of subcarriers of said multi-frequency signal for a plurality of cells. Such radio access point is illustrated in figure 7.
More particularly, the figure 7 illustrates a radio access point RD for distributing the power of a multi-frequency signal among a plurality of subcarriers of said multi-frequency signal for a plurality of cells C1, C2, C3, wherein said multi-frequency signal is divided in a plurality of subcarrier groups SG1, SG2, SG3, SG4, SG5, SG16, SG7, SG8, SG9 N subcarrier groups forming a master subcarrier group MSG1, MSG2, MGS3, a cell C1, C2, C3 comprising N master subcarrier groups MSG1, MSG2, MSG3.
The radio access point RD is adapted for, when a user terminal served by a serving cell is positioned at the border b of at least two cells C1, C2, C3, realise the following steps:
- attributing 101 a frequency profile PR1/3, PR2/3, PR3/3 to the serving cell so that the frequency profile Per1/3; PR2/3, PR3/3 of adjacent cells is different,
- selecting 102 at least one subcarrier group SG1, SG2, SG3, SG4, SG5, SG6, SG7, SG8, SG9 of a frequency profile PR1/3, PR2/3, PR3/3 attributed to said serving cell so that the power of said at least one subcarrier group SG1, SG2, SG3, SG4, SG5, SG6, SG7, SGB, SG9, selected is superior to the power of corresponding subcarrier group SG1, SG2, SG3, SG4, SG5, SG6, SG7, SG8, SG9, from a frequency profile PR1/3, PR2/3, PR3/3 attributed to an adjacent cell C1, C2, C3, each frequency profile PR1/3, PR2/3, PR3/3 comprising a plurality of master subcarrier groups MSG1, MSG2, MSG3 and comprising:
   ∘ one master subcarrier group MSG1, MSG2, MSG3 where a frequency signal is emitted at a first power level PW_{L} in all its subcarrier group SG1, SG2, SG3, SG4, SG5, SG6, SG7, SG8, SG9; said one master subcarrier group MSG1, MSG2, MSG3 being different for each frequency profile PR1/3, PR2/3, PR3/3;
   ∘ one subcarrier group SG1, SG2, SG3, SG4, SG5, SG6, SG7, SG8, SG9, of each other master subcarrier group MSG1, MSG2, MSG3 where the frequency signal is emitted at said first power level PW_{L} ; said one subcarrier group SG1, SG2, SG3, SG4, SG5, SG6, SG7, SG8, SG9, being different for each frequency profile PR1/3, PR2/3, PR3/3;
   ∘ in the others subcarrier groups SG1, SG2, SG3, SG4, SG5, SG6, SG7, SG8, SG9 of said other master subcarrier groups MSG1, SMG2, MSG3, the frequency signal is emitted at a second power level PW_{H}, said second power level PW_{H} being higher than the first power level PW_{L}.

Thus the radio access point RD comprises a unit processor adapted for executing the above step. The functions of the various elements shown in the FIGs or describe in the description., including any functional blocks, may be provided through the use of dedicated hardware as well as hardware capable of executing software in association with appropriate software. When provided by a processor, the functions may be provided by a single dedicated processor, by a single shared processor, or by a plurality of individual processors, some of which may be shared. Moreover, explicit use of the term "processor" or "controller" should not be construed to refer exclusively to hardware capable of executing software, and may implicitly include, without limitation, digital signal processor (DSP) hardware, network processor, application specific integrated circuit (ASIC), field programmable gate array (FPGA), read only memory (ROM) for storing software, random access memory (RAM), and non volatile storage. Other hardware, conventional and/or custom, may also be included. Similarly, any switches shown in the FIGS or describes in the description are conceptual only. Their function may be carried out through the operation of program logic, through dedicated logic, through the interaction of program control and dedicated logic, or even manually, the particular technique being selectable by the implementer as more specifically understood from the context.

A person of skill in the art would readily recognize that steps of various above-described methods can be performed by programmed computers. Herein, some embodiments are also intended to cover program storage devices, e.g., digital data storage media, which are machine or computer readable and encode machine-executable. The program storage devices are therefore non transitory medium and may be, e.g., digital memories, magnetic storage media such as a magnetic disks and magnetic tapes, hard drives, or optically readable digital data storage media. The embodiments are also intended to cover computers programmed to perform said steps of the above-described method.

The invention concerns also a non transitory program storage medium comprising a computer program product PG comprising a set of instructions, which when loaded into a radio access point RD, causes the radio access point RD to carry out the method 100 for distributing the power of a multi-frequency signal among a plurality of subcarriers according to the invention previously detailed.

The invention concerns also a computer program product PG, comprising a set of instructions, which when loaded into a radio access point RD, causes the radio access point RD to carry out the method 100 for distributing the power of a multi-frequency signal among a plurality of subcarriers according to the invention previously detailed. One (or a plurality) of computer program products PG as illustrated in Fig. 7 can be contained in the radio access point RD, said radio access point comprising a unit processor UP. A unit processor UP comprises one or a plurality of processors. The computer program products PG comprise a set of instructions. Thus, said set of instructions contained, for example, in a radio access memory, may cause the radio access point to carry out the different steps of the method 100.

The description and drawings merely illustrate the principles of the invention. It will thus be appreciated that those skilled in the art will be able to devise various arrangements that, although not explicitly described or shown herein, embody the principles of the invention. Furthermore, all examples recited herein are principally intended expressly to be only for pedagogical purposes to aid the reader in understanding the principles of the invention and the concepts contributed by the inventor(s) to furthering the art, and are to be construed as being without limitation to such specifically recited examples and conditions. Moreover, all statements herein reciting principles, aspects, and embodiments of the invention, as well as specific examples thereof, are intended to encompass equivalents thereof, without departing from the scope of the invention as defined in the appended claims.

## Claims

1. Method (100) for distributing the power of a multi-frequency signal among a plurality of subcarriers of said multi-frequency signal for a plurality of cells (C1, C2, C3), wherein said multi-frequency signal is divided in a plurality of subcarrier groups (SG1, SG2, SG3, SG4, SG5, SG6, SG7, SG8, SG9), N subcarrier groups (SG1, SG2, SG3, SG4, SG5, SG6, SG7, SG8, SG9) forming a master subcarrier group (MSG1, MSG2, MGS3), a cell (C1, C2, C3) comprising N master subcarrier groups (MSG1, MSG2, MSG3), said method (100) comprises the following steps of, when a user terminal served by a serving cell is positioned at the border (b) of at least two cells (C1, C2, C3), :
- attributing (101), by a radio access point, a frequency profile (PR1/3, PR2/3, PR3/3) to the serving cell, wherein, after said attributing (101), two adjacent cells do not have the same frequency profile (PR1/3, PR213, PR3/3);
- selecting (102) for allocation to said user terminal, by a radio access point, at least one subcarrier group (SG1, SG2, SG3, SG4, SG5, SG6, SG7, SG8, SG9) of the frequency profile (PR1/3, PR2/3, PR3/3) attributed to said serving cell, said at least one subcarrier group (SG1, SG2, SG3, SG4, SG5, SG6, SG7, SG8, SG9) selected emitting at a second power level which is superior to a first power level emitted by the same subcarrier group (SG1, SG2, SG3, SG4, SG5, SG6, SG7, SGB, SG9) from a frequency profile (PR1/3, PR2/3, PR3/3) attributed to an adjacent cell (C1, C2, C3) of the serving cell each frequency profile (PR1/3, PR2/3, PR3/3) having a plurality of master subcarrier groups (MSG1, MSG2, MSG3) comprising:
∘ one master subcarrier group (MSG1, MSG2, MSG3) where a frequency signal is emitted at the first power level (PW_{L}) in all its subcarrier group (SG1, SG2, SG3, SG4, SG5, SG6, SG7, SG8, SG9); said one master subcarrier group (MSG1, MSG2, MSG3) being different for each frequency profile (PR1/3, PR213, PR313);
∘ one subcarrier group (SG1, SG2, SG3, SG4, SG5, SG6, SG7, SG8, SG9) of each other master subcarrier group (MSG1, MSG2, MSG3) where the frequency signal is emitted at said first power level (PW_{L}); said one subcarrier group (SG1, SG2, SG3, SG4, SG5, SG6, SG7, SG8, SG9) being different for each frequency profile (PR1/3, PR2/3, PR3/3);
∘ in the others subcarrier groups (SG1, SG2, SG3, SG4, SG5, SG6, SG7, SG8, SG9) of said other master subcarrier groups (MSG1, SMG2, MSG3), the frequency signal is emitted at the second power level (PW_{H}), said second power level (PW_{H}) being higher than the first power level (PW_{L}).

2. Method (100) according to the preceding claim, wherein N equals 3.

3. Method (100) according to claim 1, wherein N equals 7.

4. Method (100) according to any of the preceding claims, wherein :
- a user terminal informs, periodically a radio access point (RD1, RD2, RD3) belonging to the serving cell (C1, C2, C3) where the user terminal is located, of the neighbouring cell (C1, C2, C3) wherein the frequency power reception is higher, and
- the emissions of frequency signal are scheduled periodically according to an allocation graph (G3, G7) and to said information's.

5. Method (100) according to claims 2 and 4 wherein the allocation graph (G3) is constructed as following:
- for each cell (Cn) a frequency profile is attributed and the corresponding radio access point (RDn) emits the frequency signal at a first power level (PW_{L}) in all subcarrier groups of a master subcarrier group (MSGn),
- for each two other master subcarrier groups (MSGn-1) and (MSGn+1) adjacent to said master subcarrier group (MSGn), the radio access point (RDn):
∘ emits the frequency signal at said first power level (PW_{L}) in one subcarrier group adjacent to said master subcarrier group (MSGn),
∘ emits the frequency signal at a second power level (PW_{H}) in the other subcarrier groups.

6. Method according to one of the preceding claims 1, 3 and 4 wherein the allocation graph (G7) is constructed as following:
∘ for each cell (C0, C1, C2, C3, C4, C5, C6) a frequency profile (PR1/7, PR2/7, PR3/7, PR4/7, PR5/7, PR6/7, PR7/7) is attributed and the corresponding radio access point (RD) emits the frequency signal at a first power level (PW_{L}) in all subcarrier groups (SG) of a master subcarrier group (MSG1, MSG2, MSG3, MSG4, MSG5, MSG6, MSG7),
∘ for all the other master subcarrier groups (MSG1, MSG2, MSG3, MSG4, MSG5, MSG6, MSG7), the corresponding radio access point (RD):
▪ emits the frequency signal at said first power level (PW_{L}) in a same subcarrier group (SG) of each master subcarrier group (MSG), the same subcarrier group (SG) being different for each frequency profile (PR1/7, PR2/7, PR3/7, PR4/7, PR5/7, PR6/7, PR7/7), and
▪ emits the frequency signal at a second power level (PW_{H}) in the other subcarrier groups (SG).

7. A computer program (PG) comprising a set of instructions, which when loaded into, and executed by, a radio access point (RD), causes the radio access point (RD) to carry out the method (100) for distributing the power of a multi-frequency signal among a plurality of subcarriers, as claimed in any one of the previous claims 1 to 6.

8. A non transitory program storage medium comprising a computer program (PG) comprising a set of instructions, which when loaded into, and executed by, a radio access point (RD), causes the radio access point (RD) to carry out the method (100) for distributing the power of a multi-frequency signal among a plurality of subcarriers, as claimed in any one of the previous claims 1 to 6.

9. Radio access point (RD) for distributing the power of a multi-frequency signal among a plurality of subcarriers of said multi-frequency signal for a plurality of cells (C1, C2, C3), wherein said multi-frequency signal is divided in a plurality of subcarrier groups (SG1, SG2, SG3, SG4, SG5, SG6, SG7, SG8, SG9), N subcarrier groups (SG1, SG2, SG3, SG4, SGS, SG6, SG7, SGB, SG9) forming a master subcarrier group (MSG1, MSG2, MGS3), a cell (C1, C2, C3) comprising N master subcarrier groups (MSG1, MSG2, MSG3), said radio access point (RD) being adapted for, when a user terminal served by a serving cell is positioned at the border b of at least two cells (C2, C2, C3), realise the steps of :
o attributing (101) a frequency profile (PR1/3, PR2/3, PR3/3) to the serving cell, wherein, after said attributing (101), two adjacent cells do not have the same frequency profile (PR1/3, PR2/3, PR3/3);
∘ selecting (102) at least one subcarrier group (SG1, SG2, SG3, SG4, SG5, SG6, SG7, SG8, SG9) of the frequency profile (PR1/3, PR2/3, PR3/3) attributed to said serving cell, said at least one subcarrier group (SG1, SG2, SG3, SG4, SG5, SG6, SG7, SG8, SG9) selected emitting at a second power level which is superior to a first power level emitted by the same subcarrier group (SG1, SG2, SG3, SG4, SG5, SG6, SG7, SG8, SG9) from a frequency profile (PR1/3, PR2/3, PR3/3) attributed to an adjacent cell (C1, C2, C3) of the serving cell, each frequency profile (PR1/3, PR2/3, PR3/3) having a plurality of master subcarrier groups (MSG1, MSG2, MSG3) compriging:
▪ one master subcarrier group (MSG1, MSG2, MSG3) where a frequency signal is emitted at a first power level (PW_{L}) in all its subcarrier group (SG1, SG2, SG3, SG4, SG5, SG6, SG7, SG8, SG9); said one master subcarrier group (MSG1, MSG2, MSG3) being different for each frequency profile (PR1/3, PR2/3, PR3/3);
▪ one subcarrier group (SG1, SG2, SG3, SG4, SG5, SG6, SG7, SG8, SG9) of each other master subcarrier group (MSG1, MSG2, MSG3) where the frequency signal is emitted at said first power level (PW_{L}) ; said one subcarrier group (SG1, SG2, SG3, SG4, SG5, SG6, SG7, SG8, SG9) being different for each frequency profile (PR1/3, PR2/3, PR3/3);
▪ in the others subcarrier groups (SG1, SG2, SG3, SG4, SG5, SG6, Sag7, SG8, SG9) of said other master subcarrier groups (MSG1, SMG2, MSG3), the frequency signal is emitted at a second power level (PW_{H}), said second power level (PW_{H}) being higher than the first power level (PWL).

## Patentansprüche

1. Verfahren (100) zur Verteilung der Leistung eines Mehrfrequenzsignals unter einer Vielzahl von Unterträgern des besagten Mehrfrequenzsignals für eine Vielzahl von Zellen (C1, C2, C3), wobei das besagte Mehrfrequenzsignal in eine Vielzahl von Unterträgergruppen (SG1, SG2, SG3, SG4, SG5, SG6, SG7, SG8, SG9) unterteilt ist, wobei N Unterträgergruppen (SG1, SG2, SG3, SG4, SG5, SG6, SG7, SG8, SG9) eine Master-Unterträgergruppe (MSG1, MSG2, MSG3) bilden, wobei eine Zelle (C1, C2, C3) N Master-Unterträgergruppen (MSG1, MSG2, MSG3) umfasst, wobei das besagte Verfahren (100) die folgenden Schritte umfasst, wenn sich ein von einer bedienenden Zelle bedientes Benutzerendgerät am Rand (b) mindestens zweier Zellen (C1, C2, C3) befindet:
- Zuordnen (101), durch einen Funkzugangspunkt, eines Frequenzprofils (PR1/3, PR2/3, PR3/3) zu der bedienenden Zelle, wobei nach dem besagten Zuordnen (101) zwei angrenzende Zellen nicht dasselbe Frequenzprofil (PR1/3, PR2/3, PR3/3) aufweisen;
- Auswählen (102), für die Zuweisung an das besagte Benutzerendgerät, durch einen Funkzugangspunkt, mindestens einer Unterträgergruppe (SG1, SG2, SG3, SG4, SG5, SG6, SG7, SG8, SG9) des der besagten bedienenden Zelle zugeordneten Frequenzprofils (PR1/3, PR2/3, PR3/3), wobei die besagte mindestens eine ausgewählte Unterträgergruppe (SG1, SG2, SG3, SG4, SG5, SG6, SG7, SG8, SG9) mit einem zweiten Leistungspegel aussendet, welcher höher als ein erster Leistungspegel ist, der von derselben Unterträgergruppe (SG1, SG2, SG3, SG4, SG5, SG6, SG7, SG8, SG9) von einem einer angrenzenden Zelle (C1, C2, C3) der bedienenden Zelle zugeordneten Frequenzprofil (PR1/3, PR2/3, PR3/3) ausgesendet wird, wobei jedes Frequenzprofil (PR1/3, PR2/3, PR3/3) eine Vielzahl von Master-Unterträgergruppen (MSG1, MSG2, MSG3) aufweist, umfassend:
∘ eine Master-Unterträgergruppe (MSG1, MSG2, MSG3), in der ein Frequenzsignal mit dem ersten Leistungspegel (PW_{L}) in allen ihren Unterträgergruppen (SG1, SG2, SG3, SG4, SG5, SG6, SG7, SG8, SG9) ausgesendet wird; wobei die besagte eine Master-Unterträgergruppe (MSG1, MSG2, MSG3) für jedes Frequenzprofil (PR1/3, PR2/3, PR3/3) unterschiedlich ist;
∘ eine Unterträgergruppe (SG1, SG2, SG3, SG4, SG5, SG6, SG7, SG8, SG9) einer jeden anderen Master-Unterträgergruppe (MSG1, MSG2, MSG3), wobei das Frequenzsignal ist mit dem besagten ersten Leistungspegel (PW_{L}) ausgesendet wird; wobei die besagte eine Unterträgergruppe (SG1, SG2, SG3, SG4, SG5, SG6, SG7, SG8, SG9) für jedes Frequenzprofil (PR1/3, PR2/3, PR3/3) unterschiedlich ist;
∘ wobei in den anderen Unterträgergruppen (SG1, SG2, SG3, SG4, SG5, SG6, SG7, SG8, SG9) der besagten anderen Master-Unterträgergruppen (MSG1, SMG2, MSG3) das Frequenzsignal mit dem zweiten Leistungspegel (PW_{H}) ausgesendet wird, wobei der besagte zweite Leistungspegel (PW_{H}) höher als der erste Leistungspegel (PW_{L}) ist.

2. Verfahren (100) nach dem vorstehenden Anspruch, wobei N gleich 3 ist.

3. Verfahren (100) nach Anspruch 1, wobei N gleich 7 ist.

4. Verfahren (100) nach einem beliebigen der vorstehenden Ansprüche, wobei:
- Ein Benutzerendgerät einen Funkzugangspunkt (RD1, RD2, RD3), welcher der bedienenden Zelle (C1, C2, C3), in der sich das Benutzerendgerät befindet, periodisch über benachbarte Zellen (C1, C2, C3), in denen der Frequenzleistungsempfang höher ist, informiert, und
- die Aussendungen von Frequenzsignalen gemäß einem Zuweisungsgraphen (G3, G7) und den besagten Informationen periodisch geplant werden.

5. Verfahren (100) nach den Ansprüchen 2 und 4, wobei der Zuweisungsgraph (G3) wie folgt aufgebaut ist:
- Für jede Zelle (Cn) wird ein Frequenzprofil zugeordnet, und der entsprechende Funkzugangspunkt (RDn) sendet das Frequenzsignal mit einem ersten Leistungspegel (PW_{L}) in allen Unterträgergruppen einer Master-Unterträgergruppe (MSGn) aus,
- für jede zwei anderen Master-Unterträgergruppen (MSGn-1) und (MSGn+1), welche an die besagte Master-Unterträgergruppe (MSGn) angrenzen, sendet der Funkzugangspunkt (RDn):
∘ das Frequenzsignal mit dem besagten ersten Leistungspegel (PW_{L}) in einer an die besagte Master-Unterträgergruppe (MSNn) angrenzenden Unterträgergruppe aus,
∘ das Frequenzsignal mit einem zweiten Leistungspegel (PW_{H}) in den anderen Unterträgergruppen aus.

6. Verfahren nach einem der vorstehenden Ansprüche 1, 3 und 4, wobei der Zuweisungsgraph (G7) wie folgt aufgebaut ist:
o Für jede Zelle (C0, C1, C2, C3, C4, C5, C6) wird ein Frequenzprofil (PR1/7, PR2/7, PR3/7, PR4/7, PT5/7, PR6/7, PR7/7) zugeordnet, und der entsprechende Funkzugangspunkt (RD) sendet das Frequenzsignal mit einem ersten Leistungspegel (PW_{L}) in allen Unterträgergruppen (SG) einer Master-Unterträgergruppe (MSG1, MSG2, MSG3, MSG4, MSG5, MSG6, MSG7) aus,
∘ für alle anderen Master-Unterträgergruppen (MSG1, MSG2, MSG3, MSG4, MSG5, MSG6, MSG7) sendet der entsprechende Funkzugangspunkt (RD):
• das Frequenzsignal mit dem besagten ersten Leistungspegel (PW_{L}) in einer selben Unterträgergruppe (SG) einer jeden Master-Unterträgergruppe (MSG) aus, wobei dieselbe Unterträgergruppe (SG) für jedes Frequenzprofil (PR1/7, PR2/7, PR3/7, PR4/7, PT5/7, PR6/7, PR7/7) unterschiedlich ist, und
• das Frequenzsignal mit einem zweiten Leistungspegel (PW_{H}) in den anderen Unterträgergruppen (SG) aus.

7. Computerprogramm (PG) mit einem Satz von Befehlen, welche, wenn sie auf einem Funkzugangspunkt (RD) geladen sind und durch diesen ausgeführt werden, bewirken, dass der Funkzugangspunkt (RD) das Verfahren (100) zur Verteilung der Leistung eines Mehrfrequenzsignals unter einer Vielzahl von Unterträgern gemäß einem beliebigen der vorstehenden Ansprüche 1 bis 6 durchführt.

8. Vorübergehendes Programmspeichermedium, umfassend ein Computerprogramm (PG) mit einem Satz von Befehlen, welche, wenn sie auf einem Funkzugangspunkt (RD) geladen sind und durch diesen ausgeführt werden, bewirken, dass der Funkzugangspunkt (RD) das Verfahren (100) zur Verteilung der Leistung eines Mehrfrequenzsignals unter einer Vielzahl von Unterträgern gemäß einem beliebigen der vorstehenden Ansprüche 1 bis 6 durchführt.

9. Funkzugangspunkt (RD) zur Verteilung der Leistung eines Mehrfrequenzsignals unter einer Vielzahl von Unterträgern des besagten Mehrfrequenzsignals für eine Vielzahl von Zellen (C1, C2, C3), wobei das besagte Mehrfrequenzsignal in eine Vielzahl von Unterträgergruppen (SG1, SG2, SG3, SG4, SG5, SG6, SG7, SG8, SG9) unterteilt ist, wobei N Unterträgergruppen (SG1, SG2, SG3, SG4, SG5, SG6, SG7, SG8, SG9) eine Master-Unterträgergruppe (MSG1, MSG2, MSG3) bilden, wobei eine Zelle (C1, C2, C3) N Master-Unterträgergruppen (MSG1, MSG2, MSG3) umfasst, wobei der besagte Funkzugangspunkt (RD) dazu ausgelegt ist, die folgenden Schritte durchzuführen, wenn sich ein von einer bedienenden Zelle bedientes Benutzerendgerät am Rand b mindestens zweier Zellen (G1, C2, C3) befindet:
∘ Zuordnen (101), durch einen Funkzugangspunkt, eines Frequenzprofils (PR1/3, PR2/3, PR3/3) zu der bedienenden Zelle, wobei nach dem besagten Zuordnen (101) zwei angrenzende Zellen nicht dasselbe Frequenzprofil (PR1/3, PR2/3, PR3/3) aufweisen;
∘ Auswählen (102) mindestens einer Unterträgergruppe (SG1, SG2, SG3, SG4, SG5, SG6, SG7, SG8, SG9) des der besagten bedienenden Zelle zugeordneten Frequenzprofils (PR1/3, PR2/3, PR3/3), wobei die besagte mindestens eine ausgewählte Unterträgergruppe (SG1, SG2, SG3, SG4, SG5, SG6, SG7, SG8, SG9) mit einem zweiten Leistungspegel aussendet, welcher höher als ein erster Leistungspegel ist, der von derselben Unterträgergruppe (SG1, SG2, SG3, SG4, SG5, SG6, SG7, SG8, SG9) von einem einer angrenzenden Zelle (C1, C2, C3) der bedienenden Zelle zugeordneten Frequenzprofiil (PR1/3, PR2/3, PR3/3) ausgesendet wird, wobei jedes Frequenzprofil (PR1/3, PR2/3, PR3/3) eine Vielzahl von Master-Unterträgergruppen (MSG1, MSG2, MSG3) aufweist, umfassend:
• eine Master-Unterträgergruppe (MSG1, MSG2, MSG3), in der ein Frequenzsignal mit einem ersten Leistungspegel (PW_{L}) in allen ihren Unterträgergruppen (SG1, SG2, SG3, SG4, SG5, SG6, SG7, SG8, SG9) ausgesendet wird; wobei die besagte eine Master-Unterträgergruppe (MSG1, MSG2, MSG3) für jedes Frequenzprofil (PR1/3, PR2/3, PR3/3) unterschiedlich ist;
• eine Unterträgergruppe (SG1, SG2, SG3, SG4, SG5, SG6, SG7, SG8, SG9) einer jeden anderen Master-Unterträgergruppe (MSG1, MSG2, MSG3), wobei das Frequenzsignal ist mit dem besagten ersten Leistungspegel (PW_{L}) ausgesendet wird; wobei die besagte eine Unterträgergruppe (SG1, SG2, SG3, SG4, SG5, SG6, SG7, SG8, SG9) für jedes Frequenzprofil (PR1/3, PR2/3, PR3/3) unterschiedlich ist;
• wobei in den anderen Unterträgergruppen (SG1, SG2, SG3, SG4, SG5, SG6, SG7, SG8, SG9) der besagten anderen Master-Unterträgergruppen (MSG1, SMG2, MSG3) das Frequenzsignal mit einem zweiten Leistungspegel (PW_{H}) ausgesendet wird, wobei der besagte zweite Leistungspegel (PW_{H}) höher als der erste Leistungspegel (PW_{L}) ist.

## Revendications

1. Procédé (100) pour répartir la puissance d'un signal multi-fréquence entre une pluralité de sous-porteuses dudit signal multi-fréquence pour une pluralité de cellules (C1, C2, C3), dans lequel ledit signal multi-fréquence est divisé en une pluralité de groupes de sous-porteuses (SG1, SG2, SG3, SG4, SG5, SG6, SG7, SG8, SG9), N groupes de sous-porteuses (SG1, SG2, SG3, SG4, SG5, SG6, SG7, SG8, SG9) formant un groupe de sous-porteuses maître (MSG1, MSG2, MSG3), une cellule (C1, C2, C3) comprenant N groupes de sous-porteuses maîtres (MSG1, MSG2, MSG3), ledit procédé (100) comprenant les étapes suivantes, lorsqu'un terminal d'utilisateur desservi par une cellule de desserte est positionné à la frontière (b) d'au moins deux cellules (C1, C2, G3) :
- attribuer (101), par un point d'accès radio, un profil de fréquence (PR1/3, PR2/3, PR3/3) à la cellule de desserte, où, après ladite attribution (101), deux cellules adjacentes n'ont pas le même profil de fréquence (PR1/3, PR2/3, PR3/3) ;
- sélectionner (102) pour l'allocation audit terminal d'utilisateur, par un point d'accès radio, au moins un groupe de sous-porteuses (SG1, SG2, SG3, SG4, SG5, SG6, SG7, SG8, SG9) du profil de fréquence (PR1/3, PR2/3, PR3/3) attribué à ladite cellule de desserte, ledit au moins un groupe de sous-porteuses (SG1, SG2, SG3, SG4, SG5, SG6, SG7, SG8, SG9) sélectionné émettant à un second niveau de puissance qui est supérieur à un premier niveau de puissance émis par le même groupe de sous-porteuses (SG1, SG2, SG3, SG4, SG5, SG6, SG7, SG8, SG9) à partir d'un profil de fréquence (PR1/3, PR2/3, PR3/3) attribué à une cellule adjacente (C1, C2, C3) de la cellule de desserte, chaque profil de fréquence (PR1/3, PR2/3, PR3/3) ayant une pluralité de groupes de sous-porteuses maîtres (MSG1, MSG2, MSG3) comprenant :
∘ un groupe de sous-porteuses maître (MSG1, MSG2, MSG3) où un signal de fréquence est émis au premier niveau de puissance (PW_{L}) dans tout son groupe de sous-porteuses (SG1, SG2, SG3, SG4, SG5, SG6, SG7, SG8, SG19) ; ledit un groupe de sous-porteuses maître (MSG1, MSG2, MSG3) étant différent pour chaque profil de fréquence (PR1/3, PR2/3, PR3/3) ;
∘ un groupe de sous-porteuses (SG1, SG2, SG3, SG4, SG5, SG6, SG7, SG8, SG9) de chaque autre groupe de sous-porteuses maître (MSG1, MSG2, MSG3) où le signal de fréquence est émis audit premier niveau de puissance (PW_{L}) ; ledit un groupe de sous-porteuses (SG1, SG2, SG3, SG4, SG5, SG6, SG7, SG8, SG9) étant différent pour chaque profil de fréquence (PR1/3, PR2/3, PR3/3) ;
∘ dans les autres groupes de sous-porteuses (SG1, SG2, SG3, SG4, SG5, SG6, SG7, SG8, SG9) desdits autres groupes de sous-porteuses maîtres (MSG1, MSG2, MSG3), le signal de fréquence est émis au second niveau de puissance (PW_{H}), ledit second niveau de puissance (PW_{H}) étant plus élevé que le premier niveau de puissance (PW_{L}).

2. Procédé (100) selon la revendication précédente, dans lequel N est égal à 3.

3. Procédé (100) selon la revendication 1, dans lequel N est égal à 7.

4. Procédé (100) selon l'une quelconque des revendications précédentes, dans lequel :
- un terminal d'utilisateur informe, périodiquement un point d'accès radio (RD1, RD2, RD3) appartenant à la cellule de desserte (C1, C2, C3) où le terminal d'utilisateur est localisé, de la cellule voisine (C1, C2, C3) dans laquelle la réception de puissance de fréquence est plus élevée, et
- les émissions de signal de fréquence sont planifiées périodiquement en fonction d'un graphe d'allocation (G3, G7) et de ladite information.

5. Procédé (100) selon les revendications 2 et 4, dans lequel le graphe d'allocation (G3) est construit comme suit :
- pour chaque cellule (Cn) un profil de fréquence est attribué et le point d'accès radio correspondant (RDn) émet le signal de fréquence à un premier niveau de puissance (PW_{L}) dans tous les groupes de sous-porteuses d'un groupe de sous-porteuses maître (MSGn),
- pour chaque deux autres groupes de sous-porteuses maîtres (MSGn-1) et (MSGn+1) adjacents audit groupe de sous-porteuses maître (MSGn), le point d'accès radio (RDn) :
∘ émet le signal de fréquence audit premier niveau de puissance (PW_{L}) dans un groupe de sous-porteuses adjacent audit groupe de sous-porteuses maître (MSGn),
∘ émet le signal de fréquence à un second niveau de puissance (PW_{H}) dans les autres groupes de sous-porteuses.

6. Procédé selon l'une des revendications 1, 3 et 4 précédentes, dans lequel le graphe d'allocation (G7) est construit comme suit :
∘ pour chaque cellule (C0, C1, C2, C3, C4, C5, C6) un profil de fréquence (PR1/7, PR2/7, PR3/7, PR4/7, PR5/7, PR6/7, PR7/7) est attribué et le point d'accès radio correspondant (RD) émet le signal de fréquence à un premier niveau de puissance (PW_{L}) dans tous les groupes de sous-porteuses (SG) d'un groupe de sous-porteuses maître (MSG1, MSG2, MSG3, MSG4, MSG5, MSG6, MSG7),
∘ pour tous les autres groupes de sous-porteuses maîtres (MSG1, MSG2, MSG3, MSG4, MSG5, MSG6, MSG7), le point d'accès radio correspondant (RD) :
▪ émet le signal de fréquence audit premier niveau de puissance (PW_{L}) dans un même groupe de sous-porteuses (SG) de chaque groupe de sous-porteuses maître (MSG), le même groupe de sous-porteuses (SG) étant différent pour chaque profil de fréquence (PR1/7, PR2/7, PR3/7, PR4/7, PR5/7, PR617, PR7/7), et
▪ émet le signal de fréquence à un second niveau de puissance (PW_{H}) dans les autres groupes de sous-porteuses (SG).

7. Programme informatique (PG) comprenant un jeu d'instructions qui, lorsqu'il est chargé dans et exécuté par un point d'accès radio (RD), amène le point d'accès radio (RD) à effectuer le procédé (100) pour répartir la puissance d'un signal multi-fréquence entre une pluralité de sous-porteuses, tel que revendiqué dans l'une quelconque des revendications 1 à 6 précédentes.

8. Support de stockage de programme non transitoire comprenant un programme informatique (PG) comprenant un jeu d'instructions qui, lorsqu'il est chargé dans et exécuté par un point d'accès radio (RD), amène le point d'accès radio (RD) à effectuer le procédé (100) pour répartir la puissance d'un signal multi-fréquence entre une pluralité de sous-porteuses, tel que revendiqué dans l'une quelconque des revendications 1 à 6 précédentes.

9. Point d'accès radio (RD) pour répartir la puissance d'un signal multi-fréquence entre une pluralité de sous-porteuses dudit signal multi-fréquence pour une pluralité de cellules (C1, C2, C3), dans lequel ledit signal multi-fréquence est divisé en une pluralité de groupes de sous-porteuses (SG1, SG2, SG3, SG4, SG5, SG6, SG7, SG8, SG9), N groupes de sous-porteuses (SG1, SG2, SG3, SG4, SG5, SG6, SG7, SG8, SG9) formant un groupe de sous-porteuses maître (MSG1, MSG2, MSG3), une cellule (C1, C2, C3) comprenant N groupes de sous-porteuses maîtres (MSG1, MSG2, MSG3), ledit point d'accès radio (RD) étant adapté pour, lorsqu'un terminal d'utilisateur desservi par une cellule de desserte est positionné à la frontière b d'au moins deux cellules (C1, C2, C3), réaliser les étapes suivantes :
∘ attribuer (101) un profil de fréquence (PR1/3, PR2/3, PR3/3) à la cellule de desserte, où, après ladite attribution (101), deux cellules adjacentes n'ont pas le même profil de fréquence (PR1/3, PR2/3, PR3/3) ;
∘ sélectionner (102) au moins un groupe de sous-porteuses (SG1, SG2, SG3, SG4, SG5, SG6, SG7, SG8, SG9) du profil de fréquence (PR1/3, PR2/3, PR3/3) attribué à ladite cellule de desserte, ledit au moins un groupe de sous-porteuses (SG1, SG2, SG3, SG4, SG5, SG6, SG7, SG8, SG9) sélectionné émettant à un second niveau de puissance qui est supérieur à un premier niveau de puissance émis par le même groupe de sous-porteuses (SG1, SG2, SG3, SG4, SG5, SG6, SG7, SG8, SG9) à partir d'un profil de fréquence (PR1/3, PR2/3, PR3/3) attribué à une cellule adjacente (C1, C2, C3) de la cellule de desserte, chaque profil de fréquence (PR1/3, PR2/3, PR3/3) ayant une pluralité de groupes de sous-porteuses maîtres (MSG1, MSG2, MSG3) comprenant :
▪ un groupe de sous-porteuses maître (MSG1, MSG2, MSG3) où un signal de fréquence est émis à un premier niveau de puissance (PW_{L}) dans tout son groupe de sous-porteuses (SG1, SG2, SG3, SG4, SG5, SG6, SG7, SG8, SG9) ; ledit un groupe de sous-porteuses maître (MSG1, MSG2, MSG3) étant différent pour chaque profil de fréquence (PR1/3, PR2/3, PR3/3) ;
▪ un groupe de sous-porteuses (SG1, SG2, SG3, SG4, SG5, SG6, SG7, SG8, SG9) de chaque autre groupe de sous-porteuses maître (MSG1, MSG2, MSG3) où le signal de fréquence est émis audit premier niveau de puissance (PW_{L}) ; ledit un groupe de sous-porteuses (SG1, SG2, SG3, SG4, SG5, SG6, SG7, SG8, SG9) étant différent pour chaque profil de fréquence (PR1/3, PR2/3, PR3/3) ;
▪ dans les autres groupes de sous-porteuses (SG1, SG2, SG3, SG4, SG5, SG6, SG7, SG8, SG9) desdits autres groupes de sous-porteuses maîtres (MSG1, MSG2, MSG3), le signal de fréquence est émis à un second niveau de puissance (PW_{H}), ledit second niveau de puissance (PW_{H}) étant plus élevé que le premier niveau de puissance (PW_{L}).
